# EUROPÄISCHE PATENTSCHRIFT

(11) **EP 4 281 668 B1**
(45) Veröffentlichungstag und Bekanntmachung des Hinweises auf die Patenterteilung: **09.10.2024**
(21) Anmeldenummer: 22700306.8
(22) Anmeldetag: 06.01.2022
(51) Int. Cl.: F04B 15/02, F04B 7/00, F04B 11/00, F16K 3/06, F16K 11/06, F16K 11/072, F16K 31/122, F15B 15/00, E04G 21/04

(54) **DICKSTOFFVENTIL UND VERFAHREN ZUM BETÄTIGEN EINES DICKSTOFFVENTILS**
THICK MATERIAL VALVE AND METHOD OF OPERATING A THICK MATERIAL VALVE
VANNE POUR PRODUITS ÉPAIS ET PROCÉDÉ D'ACTIONNEMENT D'UNE VANNE POUR PRODUITS ÉPAIS

(30) Priorität: 19.01.2021 DE 102021100981
(43) Veröffentlichungstag der Anmeldung: 29.11.2023
(73) Patentinhaber: Putzmeister Engineering GmbH, 72631 Aichtal (DE)
(72) Erfinder: HAEFNER, Jens, 72631 Aichtal (DE); KORT, Frederik, 72631 Aichtal (DE); WEIMER, Ralf, 72631 Aichtal (DE)
(74) Vertreter: Glawe, Delfs, Moll
(86) Internationale Anmeldenummer: PCT/EP2022/050180
(87) Internationale Veröffentlichungsnummer: WO 2022/157013

(56) Entgegenhaltungen:
- EP-A1- 0 561 262
- EP-A1- 3 447 313
- DE-A1- 19 503 986
- DE-A1- 19 957 337

## Beschreibung

Die Erfindung betrifft ein Dickstoffventil und ein Verfahren zum Betätigen eines Dickstoffventils. Das Dickstoffventil umfasst ein Ventilglied, das in einen ersten Schaltzustand, einen zweiten Schaltzustand und einen dritten Schaltzustand geschaltet werden kann.

Dokument EP 3 447 313 A1 offenbart einen fluidgetriebenen Stellzylinder sowie ein Verfahren zum Betätigen eines solchen Stellzylinders.

Das Betätigen eines solchen Dickstoffventils ist deswegen nicht ganz einfach, weil einerseits zum Betätigen des Dickstoffventils hohe Kräfte aufgewendet werden müssen, während andererseits nur eine kurze Zeitspanne von deutlich weniger als 1 Sekunde für den Schaltvorgang zur Verfügung steht. Eine der beiden Bedingungen einzuhalten, also entweder hohe Schaltkräfte oder eine kurze Schaltzeit, ist mit aus dem Stand der Technik bekannten Verfahren möglich. Die Kombination aus beiden Bedingungen zu verwirklichen, hat sich als nicht ganz einfach herausgestellt. Im Unterschied zu einem Dickstoffventil mit lediglich zwei Stellungen ist es nämlich nicht möglich, die Endlagen eines Steuerzylinders als Anschläge zu verwenden.

Der Erfindung liegt die Aufgabe zugrunde, ein Dickstoffventil und ein Verfahren vorzustellen, so dass das Dickstoffventil schnell und zuverlässig zwischen mehreren Schaltzuständen umgeschaltet werden kann. Die Aufgabe wird gelöst mit den Merkmalen der unabhängigen Ansprüche. Vorteilhafte Ausführungsformen sind in den Unteransprüchen angegeben.

Bei dem erfindungsgemäßen Verfahren wird ein Ventilglied zwischen einem ersten Schaltzustand und einem zweiten Schaltzustand umgeschaltet, indem einem Steuerzylinder ein erstes Volumen an Hydraulikflüssigkeit zugeführt wird. Das Ventilglied wird zwischen dem zweiten Schaltzustand und einem dritten Schaltzustand umgeschaltet, indem einem Steuerzylinder ein zweites Volumen an Hydraulikflüssigkeit zugeführt wird. Dem Steuerzylinder wird das erste Volumen an Hydraulikflüssigkeit zugeführt, indem ein Dosierkolben eines Dosierzylinders von einer ersten Endstellung in eine zweite Endstellung verfahren wird. Dem Steuerzylinder wird das zweite Volumen an Hydraulikflüssigkeit zugeführt, indem ein Dosierkolben eines Dosierzylinders von einer ersten Endstellung in eine zweite Endstellung verfahren wird. Das zweite Volumen an Hydraulikflüssigkeit kann sich von dem ersten Volumen an Hydraulikflüssigkeit unterscheiden. Von der Erfindung umfasst sind auch Ausführungsformen, bei denen das Ventilglied zwischen mehr als drei Schaltzuständen umgeschaltet wird.

Zum Auslösen eines Schaltvorgangs wird bei dem erfindungsgemäßen Verfahren lediglich ein einzelnes Stellglied eines Dosierzylinders betätigt, um die Bewegung eines Dosierkolbens in dem Dosierzylinder in Gang zu setzen. Anschließend wird das gesamte Volumen an Hydraulikflüssigkeit, das der Dosierzylinder mit einer Bewegung zwischen der ersten Endstellung und der zweiten Endstellung bereitstellt, dem Steuerzylinder zugeführt, um das Ventilglied in den nächsten Schaltzustand zu bringen. Indem der Dosierzylinder eine definierte Menge an Hydraulikflüssigkeit bereitstellt, ergibt sich unmittelbar ein definierter Zustand des Steuerzylinders. Es ist keine Rückkoppelung erforderlich, bei der der Zustand des Steuerzylinders gemessen wird, um in Abhängigkeit vom Ergebnis der Messung den Dosierzylinder anzusteuern. Ebenso ist es nicht erforderlich, den Zustand des Dosierzylinders zu überwachen oder ein zweites Stellglied des Dosierzylinders zu betätigen, um das Ende des Schaltvorgangs herbeizuführen.

Das Dickstoffventil kann zwei Durchlassöffnungen aufweisen, mit denen das Ventilglied zusammenwirkt. Wenn das Ventilglied eine Durchlassöffnung öffnet, kann Dickstoff hindurchtreten. Im geschlossenen Zustand einer Durchlassöffnung kann kein Dickstoff hindurchtreten. Es kann einen Zwischenzustand geben, in dem die Durchlassöffnung teilweise geöffnet ist, so dass ein verglichen mit dem geöffneten Zustand vermindertes Volumen an Dickstoff hindurchtreten kann. Das Dickstoffventil kann so ausgelegt sein, dass es drei Schaltzustände aufweist, wobei in einem ersten Schaltzustand nur die erste Durchlassöffnung geöffnet ist und wobei in einem weiteren Schaltzustand nur die zweite Durchlassöffnung geöffnet ist. Das Dickstoffventil kann so eingerichtet sein, dass vom ersten Schaltzustand in den zweiten Schaltzustand, vom zweiten in den dritten, vom dritten in den zweiten und vom zweiten in den ersten Schaltzustand geschaltet wird. Diese Schaltfolge kann zyklisch wiederholt werden.

Wenn das Dickstoffventil Schaltvorgänge umfasst, bei denen das Ventilglied in entgegengesetzten Richtungen bewegt wird, so kann für jede der Bewegungsrichtungen ein separater Steuerzylinder vorgesehen sein. Möglich ist auch ein einzelner Steuerzylinder, der beide Bewegungsrichtungen ansteuert.

Bei einem Schaltvorgang im Sinne der Erfindung wird eine definiertes Volumen an Hydraulikflüssigkeit von einem Dosierzylinder zu einem Steuerzylinder gefördert. Das Volumen an Hydraulikflüssigkeit ist so bemessen, dass ein in dem Steuerzylinder angeordneter Steuerkolben so angetrieben wird, dass der Steuerkolben das Ventilglied von der ersten Schaltstellung in die zweite Schaltstellung bewegt. Das Verfahren kann so durchgeführt werden, dass das Ventilglied zum Beginn und zum Ende eines Schaltvorgangs jeweils zum Stillstand gebracht wird. Möglich ist auch ein direkter Übergang zwischen einem ersten Schaltvorgang und einem unmittelbar darauf folgenden zweiten Schaltvorgang, so dass das Ventilglied mit dem Ende des ersten Schaltvorgangs abgebremst wird, ohne zum vollständigen Stillstand gebracht zu werden, und dass das Ventilglied mit dem Beginn des nächsten Schaltvorgangs wieder beschleunigt wird.

Eine Endstellung des Dosierkolbens ist durch die Konfiguration des Dosierzylinders festgelegt. Die Endstellung ergibt sich mit anderen Worten nicht daraus, dass ein Stellglied des Dosierzylinders zu einem bestimmten Zeitpunkt betätigt wird, um den Fluss an Hydraulikflüssigkeit zu unterbrechen. Eine Endstellung kann beispielsweise dadurch definiert sein, dass der Kolben mechanisch an einem Element des Dosierzylinders anstößt. Denkbar wäre auch, dass mit dem Erreichen der Endstellung ein Volumen an Hydraulikflüssigkeit eingeschlossen wird und der Dosierkolben auf diese Weise zum Halt gebracht wird. Die Endstellungen des Dosierzylinders können fest vorgegeben sein. Möglich ist auch, dass ein oder mehrere Endstellungen verändert werden können, wobei der Eingriff zum Verändern einer Endstellung mit einem zeitlichen Abstand zum Ende eines Schaltvorgangs erfolgt.

Es ist möglich, jedem der Schaltvorgänge des Ventilglieds einen eigenen Dosierzylinder zuzuordnen. Im obigen Beispiel mit drei Schaltzuständen und vier Schaltvorgängen zwischen den Schaltzuständen gibt es dann vier Dosierzylinder, wobei das Volumen jedes Dosierzylinders genau einem der Schaltvorgänge entspricht. Das mit den Dosierzylindern zur Verfügung gestellte Volumen an Hydraulikflüssigkeit kann sich unterscheiden. Wenn das erfindungsgemäße Dickstoffventil mehrere Dosierzylinder umfasst, können diese als voneinander separate Einheiten ausgebildet sein. Möglich ist auch die Verwendung eines Hydraulikblocks, in dem mehrere Dosierzylinder ausgebildet sind.

Es kann ein einzelner Dosierzylinder vorgesehen sein, der dazu eingerichtet ist, verschiedene Schaltvorgänge des Dickstoffventils anzutreiben. Das für die beiden Schaltvorgänge erforderliche Volumen an Hydraulikflüssigkeit kann übereinstimmen. Zwischen den beiden mit diesem Dosierzylinder angetriebenen Schaltvorgängen kann ein weiterer Schaltvorgang liegen, der mit einem anderen Dosierzylinder angetrieben wird.

Ein Dosierzylinder im Sinne der Erfindung kann so gestaltet sein, dass nur eine Bewegungsrichtung des Kolbens genutzt wird, um den Steuerzylinder anzutreiben, und dass der Kolben vor dem nächsten Schaltvorgang in die Ausgangsposition zurückgestellt wird. Möglich ist auch, den Dosierzylinder so zu gestalten, dass beide Bewegungsrichtungen des Kolbens zum Ansteuern des Steuerzylinders genutzt werden. Dabei kann das geförderte Volumen an Hydraulikflüssigkeit bei den beiden Bewegungsrichtungen unterschiedlich sein, wie es beispielsweise bei einem Differenzialzylinder der Fall ist.

Im einfachsten Fall ist der Dosierzylinder so eingerichtet, dass mit einer Bewegung zwischen der ersten Endstellung und der zweiten Endstellung genau ein bestimmtes Volumen an Hydraulikflüssigkeit bereitgestellt wird. Alternativ kann der Dosierzylinder dazu ausgelegt sein, ein erstes Volumen an Hydraulikflüssigkeit und ein davon verschiedenes zweites Volumen an Hydraulikflüssigkeit bereitzustellen. Der Dosierzylinder kann einen ersten Dosierkolben und einen zweiten Dosierkolben aufweisen. Der erste Dosierkolben und der zweite Dosierkolben können über eine Kolbenstange miteinander verbunden sein. Bei jedem Hub des Dosierzylinders können sowohl der erste Dosierkolben als auch der zweite Dosierkolben ein definiertes Volumen an Hydraulikflüssigkeit verdrängen. Der Dosierzylinder kann so eingerichtet sein, die zur Verfügung gestellten Mengen an Hydraulikflüssigkeit sich nicht in Abhängigkeit von der Bewegungsrichtung der Kolben unterscheiden, so dass mit anderen Worten unabhängig von der Bewegungsrichtung mit jedem Hub sowohl das erste Volumen als auch das zweite Volumen bereitgestellt werden. Durch die Verwendung eines solchen Dosierzylinders kann je nach Schaltvorgang der Steuerzylinder mit unterschiedlichen Mengen an Hydraulikflüssigkeit angesteuert werden.

In einer Ausführungsform haben die beiden Dosierkolben des Dosierzylinders einen übereinstimmenden Querschnitt. Der Unterschied zwischen dem ersten Volumen und dem zweiten Volumen kann sich daraus ergeben, dass die Kolbenstange in nur einer der beiden Dosierkammern angeordnet ist. Welcher der beiden Dosierkolben das größere Volumen fördert, kann von der Bewegungsrichtung der Kolben abhängen.

Alternativ ist auch denkbar, dass ein Dosierzylinder eine Mehrzahl von Dosierkolben umfasst, wobei der Querschnitt der Dosierkolben voneinander abweicht. Insbesondere kann der Dosierzylinder drei Dosierkolben aufweisen, von denen zwei den gleichen Querschnitt haben und der dritte einen davon abweichenden Querschnitt hat. Auch mit einem solchen Dosierzylinder können bei jedem Hub zwei verschiedene Mengen an Hydraulikflüssigkeit zur Verfügung gestellt werden.

Dosierzylinder dieser Art können verwendet werden, um zwei verschiedene Schaltvorgänge des Ventilglieds anzusteuern. Für den ersten Schaltvorgang kann dem Steuerzylinder das erste Volumen an Hydraulikflüssigkeit zugeführt werden, für den zweiten Schaltvorgang kann dem Steuerzylinder das zweite Volumen an Hydraulikflüssigkeit zugeführt werden. Möglich ist auch, einen solchen Dosierzylinder zu verwenden, um drei verschiedene Schaltvorgänge des Ventilglieds anzusteuern. Zusätzlich zu den beiden genannten Schaltvorgängen kann ein dritter Schaltvorgang angesteuert werden, indem dem Steuerzylinder die Summe aus dem ersten Volumen und dem zweiten Volumen zugeführt wird.

Wenn der Dosierkolben eines Dosierzylinders sich während eines Schaltvorgangs von der ersten Endstellung in die zweite Endstellung bewegt, wird der Steuerkolben des Steuerzylinders zunächst beschleunigt und dann wieder abgebremst. Beim Abbremsen des Steuerkolbens entsteht ein Unterdruck in der Hydraulikflüssigkeit im Steuerzylinder. Wenn die Hydraulikflüssigkeit dem Unterdruck standhält, wird der Stellzylinder allein auf diese Weise ausreichend abgebremst. Zusätzliche Maßnahmen zum Abbremsen des Steuerzylinders sind dann nicht erforderlich.

Wird der auf die Hydraulikflüssigkeit wirkende Unterdruck zu groß, kann es zu Kavitation kommen, so dass sich Gasblasen in der Hydraulikflüssigkeit bilden. Dies kann zur Folge haben, dass der Stellzylinder nicht exakt in der gewünschten Position abgebremst wird. Um dies zu verhindern, kann das Dickstoffventil so eingerichtet sein, dass der Steuerzylinder beim Annähern an eine Schaltposition ergänzend zu dem Unterdruck zwischen Steuerkolben und dem Dosierzylinder aktiv gebremst wird.

Die Bewegung, mit der das Ventilglied zwischen den verschiedenen Schaltzuständen umgeschaltet wird, kann eine Schwenkbewegung sein. Der Schwenkwinkel für den Übergang zwischen einem ersten Schaltzustand und einem zweiten Schaltzustand kann zwischen 10° und 30°, vorzugsweise zwischen 15° und 25° liegen. Das für einen Schaltvorgang aufzuwendende Drehmoment kann größer sein als 1 kNm, vorzugsweise größer sein als 5 kNm, weiter vorzugsweise größer sein als 10 kNm. In einer Ausführungsform liegt das aufzuwendende Drehmoment zwischen 18 kNm und 35 kNm. Auch höhere Werte bis beispielsweise 100 kNm sind möglich. Die Schaltzeit, innerhalb derer ein Schaltvorgang durchgeführt wird, kann kürzer sein als 1 Sekunde, vorzugsweise kürzer sein als 0,5 Sekunden, weiter vorzugsweise kürzer sein als 0,3 Sekunden. Dies kann für alle oder für einen Teil der Schaltvorgänge des Dickstoffventils gelten. In einer Ausführungsform liegt die Schaltzeit zwischen 0,1 und 0,3 Sekunden. Die Zeitspanne zwischen dem Ende eines Schaltvorgangs und dem Beginn des sich daran anschließenden Schaltvorgangs kann kürzer sein als 1 Sekunde. Diese Werte können jeweils für einen Teil der Schaltvorgänge eines Dickstoffsventils oder für alle Schaltvorgänge eines Dickstoffventils gelten.

Das erfindungsgemäße Dickstoffventil kann verwendet werden, um den Fluss von Dickstoff in einer Dickstoffpumpe zu steuern, bei der der Dickstoff mit zwei Förderzylindern im Wechsel gefördert wird. Ein Arbeitstakt der Dickstoffpumpe kann einen ersten Abschnitt umfassen, in dem der erste Förderzylinder mit einer Vorwärts-Bewegung Dickstoff durch eine geöffnete erste Durchlassöffnung des Dickstoffventils fördert, während der zweite Förderzylinder mit einer Rückwärts-Bewegung Dickstoff aus einem Vorrat ansaugt. In einem zweiten Abschnitt des Arbeitstakts kann der erste Förderzylinder weiterhin mit einer Vorwärts-Bewegung Dickstoff durch die geöffnete erste Durchlassöffnung fördern, während die zweite Durchlassöffnung geschlossen ist, so dass der Dickstoff in dem zweiten Förderzylinder verdichtet werden kann. In einer dritten Phase des Arbeitstakts können die erste Durchlassöffnung und die zweite Durchlassöffnung geöffnet sein, so dass der erste Förderzylinder und der zweite Förderzylinder parallel Dickstoff in das Dickstoffventil fördern können. In einer vierten Phase des Arbeitstakts fördert der zweite Förderzylinder mit einer Vorwärts-Bewegung Dickstoff durch die geöffnete zweite Durchlassöffnung des Dickstoffventils, während die erste Durchlassöffnung freigegeben ist, so dass der erste Förderzylinder mit einer Rückwärts-Bewegung Dickstoff aus dem Vorrat ansaugen kann. Der Arbeitstakt setzt sich fort, indem in einer fünften Phase der Dickstoff in dem zweiten Förderzylinder verdichtet wird, und indem in einer sechsten Phase der erste Förderzylinder und der zweite Förderzylinder parallel Dickstoff durch die erste Durchlassöffnung und die zweite Durchlassöffnung fördern. Anschließend beginnt der Arbeitstakt erneut.

In einer Ausführungsform, die insbesondere für eine solche Dickstoffpumpe geeignet ist, hat das Ventilglied fünf Schaltzustände. Im ersten Schaltzustand ist die erste Durchlassöffnung geöffnet und die zweite Durchlassöffnung zum Dickstoffvorrat hin freigegeben. Im zweiten Schaltzustand ist die erste Durchlassöffnung geöffnet und die zweite Durchlassöffnung geschlossen. Im dritten Schaltzustand sind die erste Durchlassöffnung und die zweite Durchlassöffnung beide geöffnet. Im vierten Schaltzustand ist die zweite Durchlassöffnung geöffnet und die erste Durchlassöffnung zum Dickstoffvorrat hin freigegeben. Im fünften Schaltzustand ist die zweite Durchlassöffnung geöffnet und die erste Durchlassöffnung geschlossen.

Das Dickstoffventil kann so gestaltet sein, dass das zum Umschalten vom ersten Schaltzustand in den zweiten Schaltzustand erforderliche Volumen an Hydraulikflüssigkeit identisch ist mit dem Volumen an Hydraulikflüssigkeit zum Umschalten vom vierten Schaltzustand in den fünften Schaltzustand. Das Dickstoffventil kann einen Dosierzylinder umfassen, mit dem sowohl der Übergang vom ersten Schaltzustand in den zweiten Schaltzustand als auch der Übergang vom vierten Schaltzustand in den fünften Schaltzustand angetrieben werden.

Das Dickstoffventil kann so gestaltet sein, dass das zum Umschalten vom zweiten Schaltzustand in den dritten Schaltzustand erforderliche Volumen an Hydraulikflüssigkeit identisch ist mit dem Volumen an Hydraulikflüssigkeit zum Umschalten vom fünften Schaltzustand in den dritten Schaltzustand. Das Dickstoffventil kann einen Dosierzylinder umfassen, mit dem sowohl der Übergang vom zweiten Schaltzustand in den dritten Schaltzustand als auch der Übergang vom fünften Schaltzustand in den dritten Schaltzustand angetrieben werden. Das mit dem zweiten Dosierzylinder geförderte Volumen kann größer sein als das mit dem ersten Dosierzylinder geförderte Volumen. Die für den Übergang vom ersten Schaltzustand in den zweiten Schaltzustand erforderliche Kraft kann größer sein als die für den Übergang vom zweiten Schaltzustand in den dritten Schaltzustand erforderliche Kraft.

Das Dickstoffventil kann so gestaltet sein, dass das zum Umschalten vom dritten Schaltzustand in den vierten Schaltzustand erforderliche Volumen an Hydraulikflüssigkeit identisch ist mit dem Volumen an Hydraulikflüssigkeit zum Umschalten vom dritten Schaltzustand in den ersten Schaltzustand. Das Dickstoffventil kann einen Dosierzylinder umfassen, mit dem sowohl der Übergang vom dritten Schaltzustand in den vierten Schaltzustand als auch der Übergang vom dritten Schaltzustand in den ersten Schaltzustand angetrieben werden. Das für diesen Schaltvorgang (dritter Schaltvorgang) geförderte Volumen kann größer sein als das für den Übergang vom ersten Schaltzustand zum zweiten Schaltzustand (erster Schaltvorgang) geförderte Volumen und/oder größer sein als das für den Übergang vom zweiten Schaltzustand zum dritten Schaltzustand (zweiter Schaltvorgang) geförderte Volumen.

In einer Ausführungsform entspricht das Volumen des dritten Schaltvorgangs der Summe aus dem Volumen des ersten Schaltvorgangs und dem Volumen des zweiten Schaltvorgangs. Der dritte Schaltvorgang kann mit demselben Dosierzylinder/denselben Dosierzylindern angetrieben werden wie der erste Schaltvorgang und der zweiten Schaltvorgang.

In einer Variante wird das erfindungsgemäße Dickstoffventil genutzt, um eine von einer Dickstoffpumpe separate Rohrweiche zu steuern. Das Ventilglied kann so eingerichtet sein, dass eine erste Einlassöffnung und eine zweite Einlassöffnung des Dickstoffventils wechselweise geöffnet und geschlossen werden. Die Rohrweiche kann ein oder mehrere Auslassöffnungen aufweisen, durch die der Dickstoff wieder aus dem Dickstoffventil austritt. Im Falle mehrerer Auslassöffnungen kann die Rohrweiche ein zweites Ventilglied umfassen, so dass eine erste Auslassöffnung und eine zweite Auslassöffnung wechselweise geöffnet und geschlossen werden. Das zweite Ventilglied kann ebenfalls mit dem erfindungsgemäßen Verfahren angesteuert werden. Möglich ist auch, dass die Rohrweiche zwei Auslassöffnungen hat und dass ein Ventilglied im Sinne der Erfindung genutzt wird, um zwischen der ersten Auslassöffnung und der zweiten Auslassöffnung umzuschalten.

Die Erfindung betrifft außerdem ein Dickstoffventil mit einem Ventilglied, das zwischen einem ersten Schaltzustand, einem zweiten Schaltzustand und einem dritten Schaltzustand umschaltbar ist. Das Dickstoffventil umfasst einen Steuerzylinder zum Betätigen des Ventilglieds und ein oder mehrere Dosierzylinder, die eine erste Endstellung und eine zweite Endstellung eines Dosierkolbens aufweisen. Dem Steuerzylinder wird zum Umschalten des Ventilglieds zwischen dem ersten Schaltzustand und dem zweiten Schaltzustand ein erstes Volumen an Hydraulikflüssigkeit zugeführt wird, indem ein Dosierkolben zwischen einer ersten Endstellung und einer zweiten Endstellung verfahren wird. Dem Steuerzylinder wird zum Umschalten des Ventilglieds zwischen dem zweiten Schaltzustand und dem dritten Schaltzustand ein zweites Volumen an Hydraulikflüssigkeit zugeführt wird, indem ein Dosierkolben zwischen einer ersten Endstellung und einer zweiten Endstellung verfahren wird.

Die Erfindung betrifft auch eine Dickstoffpumpe, die mit einem erfindungsgemäßen Dickstoffventil ausgestattet ist. Die Dickstoffpumpe kann zwei oder mehr als zwei Förderzylinder umfassen. Schließlich betrifft die Erfindung eine mit einem erfindungsgemäßen Dickstoffventil ausgestattete Rohrweiche.

Das Dickstoffventil kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang des erfindungsgemäßen Dickstoffventils beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: ein Fahrzeug, das mit einer erfindungsgemäßen Dickstoffpumpe ausgestattet ist;
- Fig. 2:: eine schematische Darstellung einer erfindungsgemäßen Dickstoffpumpe;
- Fig. 3:: eine Funktionsskizze eines Arbeitstakts eine erfindungsgemäßen Dickstoffpumpe;
- Fig. 4:: eine schematische Darstellung der Ansteuerung eines erfindungsgemäßen Dickstoffventils;
- Fig. 5:: die Ansicht aus Fig. 4 bei einer alternativen Ausführungsform der Erfindung;
- Fig. 6, 7:: Ausführungsformen von Dosierzylindern für ein erfindungsgemäßes Dickstoffventil;
- Fig. 8, 9:: schematische Darstellungen von erfindungsgemäßen Rohrweichen.

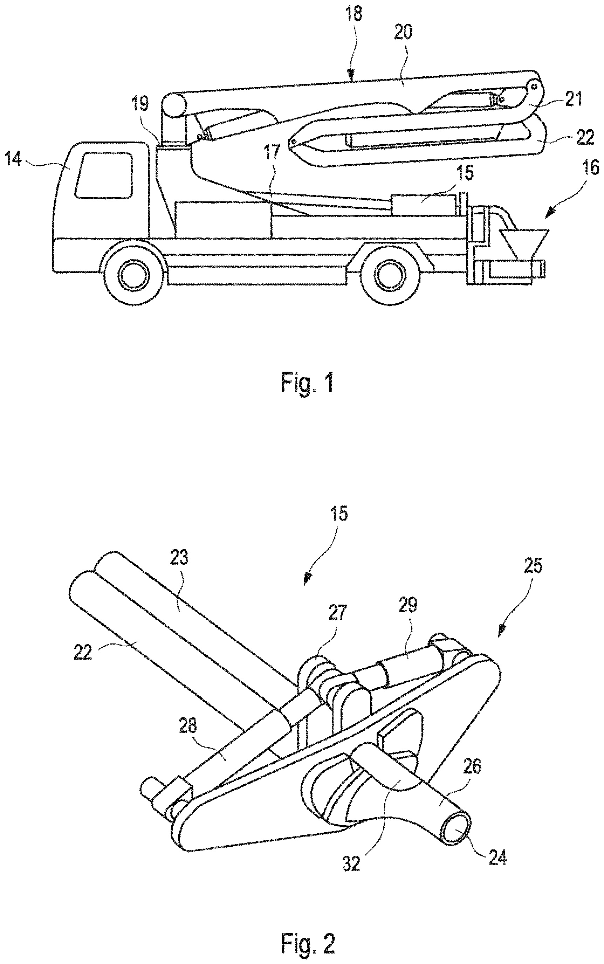

Ein in Fig. 1 gezeigter Lastwagen 14 ist mit einer Betonpumpe 15 ausgestattet, die Flüssigbeton aus einem Vorfüllbehälter 16 durch eine Förderleitung 17 fördert. Die Betonpumpe ist eine Dickstoffpumpe 15 im Sinne der Erfindung. Die Förderleitung 17 erstreckt sich entlang einem Mastarm 18, der auf einem Drehkranz 19 drehbar gelagert ist. Der Mastarm 18 umfasst drei Mastarm-Segmente 20, 21, 22, die gelenkig miteinander verbunden sind. Indem die Mastarm-Segmente 20, 21, 22 über die Gelenke relativ zueinander geschwenkt werden, kann der Mastarm 18 zwischen einem eingefalteten Zustand und einem ausgefalteten Zustand verfahren werden. Die Förderleitung 17 erstreckt sich bis über das distale Ende des dritten Mastarm-Segments 22 hinaus, so dass im ausgefalteten Zustand des Mastarms 18 der Flüssigbeton in einem von der Betonpumpe 15 entfernten Bereich ausgebracht werden kann.

Die Betonpumpe 15 umfasst gemäß Fig. 2 einen ersten Förderzylinder 22 und einen zweiten Förderzylinder 23, die in einem Wechselbetrieb Flüssigbeton aus dem Vorfüllbehälter 16 ansaugen und in Richtung einer Auslassöffnung 24 fördern. Mit einem zwischen den Förderzylindern 22, 23 und der Auslassöffnung 24 angeordneten Dickstoffventil 25 wird der Fluss des Flüssigbetons zwischen den Förderzylindern 22, 23 und der Auslassöffnung 24 gesteuert. Das Dickstoffventil umfasst ein Ventilglied 26, das bezogen auf eine Schwenkachse 32 schwenkbar gelagert ist und das über einen Betätigungshebel 27 zwischen verschiedenen Schaltzuständen umgeschaltet werden kann. Das Dickstoffventil 25 umfasst einen ersten Steuerzylinder 27 und einen zweiten Steuerzylinder 28, die hydraulisch angetrieben auf den Betätigungshebel 27 wirken.

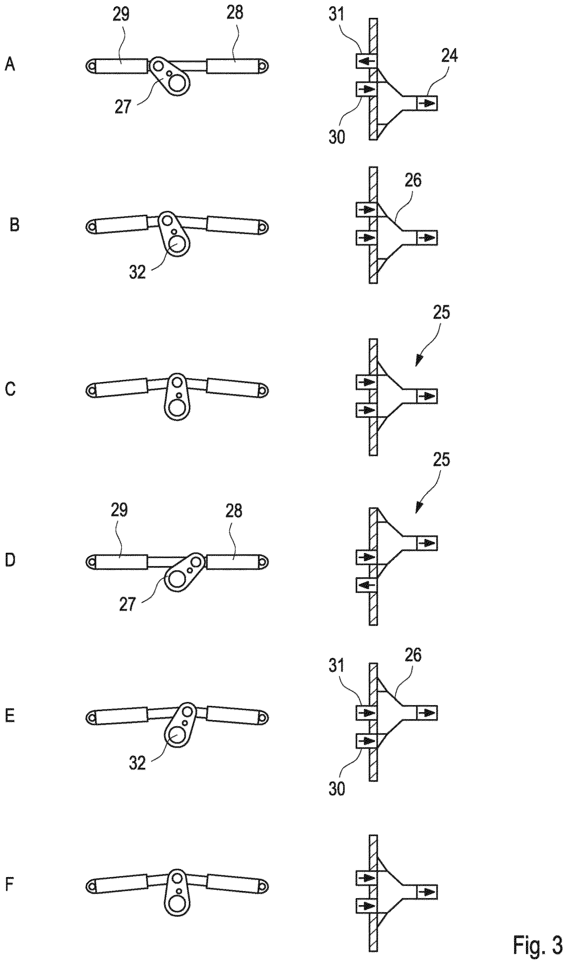

Das Dickstoffventil 25 hat gemäß Fig. 3 eine Mehrzahl von Schaltzuständen, die während eines Arbeitstakts der Betonpumpe 15 wie folgt aufeinanderfolgen. In einem Schaltzustand A ist der Steuerzylinder 28 vollständig ausgefahren und der Betätigungshebel 27 ist entgegen dem Uhrzeigersinn in seine äußerste Position gefahren. Das Ventilglied 26 öffnet eine erste Durchlassöffnung 30, die an den Innenraum des ersten Förderzylinders 22 angeschlossen ist. Der erste Förderzylinder 22 fördert in dieser Phase des Arbeitstakts mit einer Vorwärts-Bewegung Flüssigbeton durch die erste Durchlassöffnung 30 und den Innenraum des Ventilglieds 26 zur Auslassöffnung 24. Die zweite Durchlassöffnung 31 ist im Schaltzustand A freigegeben, so dass der zweite Förderzylinder 23 mit einer Rückwärts-Bewegung Flüssigbeton aus dem Vorfüllbehälter 16 ansaugen kann.

Ausgehend von Schaltzustand A wird das Dickstoffventil in Schaltzustand B umgeschaltet, indem der zweite Steuerzylinder 29 ein Stück weit ausgefahren wird. Der Betätigungshebel 27 wird im Uhrzeigersinn in eine Position geschwenkt, die zwischen der äußeren Positionen aus Schaltzustand A und einer mittleren Stellung des Betätigungshebels 27 liegt. Die erste Durchlassöffnung 30 bleibt geöffnet, so dass der erste Förderzylinder 22 weiterhin Flüssigbeton durch das Ventilglied 26 fördern kann. Die zweite Durchlassöffnung 31 ist geschlossen, der zweite Förderzylinder 23 verdichtet mit einer Vorwärts-Bewegung den Flüssigbeton im zweiten Förderzylinder 23.

Ausgehend von Schaltzustand B wird in einen Schaltzustand C umgeschaltet, indem der zweite Steuerzylinder 29 weiter ausgefahren wird, so dass der Betätigungshebel 27 in einer mittleren Stellung angeordnet ist. Das Ventilglied 26 öffnet die erste Durchlassöffnung 30 und die zweite Durchlassöffnung 31, so dass beide Förderzylinder 22, 23 parallel Flüssigbeton durch das Ventilglied 26 fördern können.

Ausgehend von Schaltzustand C wird in einem Schaltzustand D umgeschaltet, indem der zweite Steuerzylinder 29 vollständig ausgefahren wird, so dass der Betätigungshebel 27 in seine im Uhrzeigersinn betrachtet äußerste Stellung gebracht wird. Das Ventilglied 26 öffnet die zweite Durchlassöffnung 31, so dass der zweite Förderzylinder 23 Flüssigbeton durch das Ventilglied 26 fördern kann. Die erste Durchlassöffnung 30 wird freigegeben, so dass der erste Förderzylinder 22 mit einer Rückwärts-Bewegung Flüssigbeton aus dem Vorfüllbehälter 16 ansaugen kann.

Ausgehend von Schaltzustand D wird das Dickstoffventil in Schaltzustand E umgeschaltet, indem der erste Steuerzylinder 28 ein Stück weit ausgefahren wird. Der Betätigungshebel 27 wird entgegen dem Uhrzeigersinn in eine Position geschwenkt, die zwischen der äußeren Position aus Schaltzustand D und einer mittleren Stellung des Betätigungshebels 27 liegt. Die zweite Durchlassöffnung 31 bleibt geöffnet, so dass der zweite Förderzylinder 23 weiterhin Flüssigbeton durch das Ventilglied 26 fördern kann. Die erste Durchlassöffnung 30 ist geschlossen, der zweite Förderzylinder 23 verdichtet mit einer Vorwärts-Bewegung den Flüssigbeton im ersten Förderzylinder 22.

Ausgehend von Schaltzustand E wird das Dickstoffventil in Schaltzustand F umgeschaltet, indem der erste Steuerzylinder 28 weiter ausgefahren wird, so dass der Betätigungshebel 27 in einer mittleren Stellung angeordnet ist. Das Ventilglied 26 öffnet die erste Durchlassöffnung 30 und die zweite Durchlassöffnung 31, so dass beide Förderzylinder 22, 23 parallel Flüssigbeton durch das Ventilglied 26 fördern können.

Ausgehend von Schaltzustand F wird wieder in Schaltzustand A zurückgeschaltet, indem der erste Steuerzylinder 28 vollständig ausgefahren wird. Damit beginnt ein neuer Arbeitstakt der Betonpumpe 15.

Zwischen den Schaltzuständen A und F liegt ein Schwenkwinkel von etwa 80°. Die Schaltvorgänge zwischen den Schaltzuständen A, B, C sowie zwischen den Schaltzuständen D, E, F erstrecken sich jeweils über einen Schwenkwinkel von etwa 20°. Das Drehmoment, dass für die Schaltvorgänge aufzuwenden ist, liegt bei etwa 30 kNm. Für einen Schaltvorgang steht eine Schaltzeit von etwa 0,3 Sekunden zur Verfügung. Die Verweildauer in einem Schaltzustand vor dem nächsten Schaltvorgang ist kürzer als 1 Sekunde.

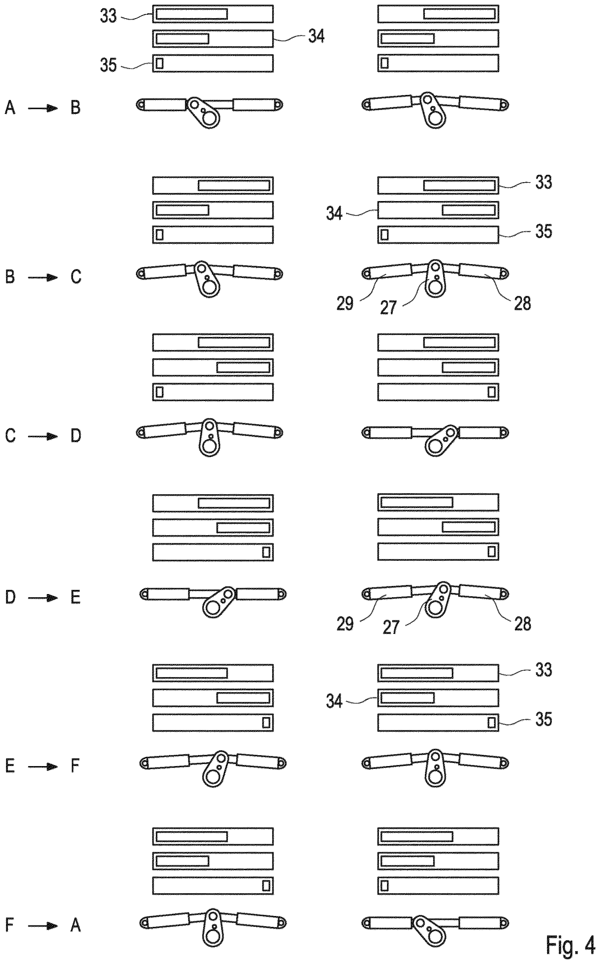

Die Ansteuerung der Steuerzylinder 28, 29 erfolgt gemäß Fig. 4 über eine Mehrzahl von Dosierzylindern 33, 34, 35, die jeweils dazu ausgelegt sind, den Steuerzylindern 28, 29 eine definierte Menge an Hydraulikflüssigkeit zuzuführen. Für den Übergang von Schaltzustand A zu Schaltzustand B wird der erste Dosierzylinder 33 von einer ersten Endstellung in eine zweite Endstellung verfahren, wodurch dem zweiten Steuerzylinder 29 ein Volumen von 440 ml an Hydraulikflüssigkeit zugeführt wird. Für den Übergang von Schaltzustand B zu Schaltzustand C wird der zweite Dosierzylinder 34 betätigt, wodurch dem zweiten Steuerzylinder 29 ein Volumen von 530 ml an Hydraulikflüssigkeit zugeführt wird. Für den Übergang von Schaltzustand C zu Schaltzustand D wird der dritte Dosierzylinder 35 betätigt, wodurch dem zweiten Steuerzylinder 29 ein Volumen von 970 ml an Hydraulikflüssigkeit zugeführt wird. Entsprechend erfolgt in umgekehrter Drehrichtung der Übergang zwischen den Schaltzuständen D, E, F, indem die Dosierzylinder 33, 34, 35 in entgegengesetzter Richtung betätigt werden.

Bei jedem der Schaltvorgänge wird genau einer der Dosierzylinder 33, 34, 35 von einer ersten Endstellung in eine zweite Endstellung bewegt. Dies erfordert jeweils das Betätigen von lediglich einem einzelnen Stellglied des Dosierzylinders 33, 34, 35, mit dem die Bewegung des betreffenden Dosierkolbens in Gang gesetzt wird, die Bewegung des Dosierkolbens endet bei Erreichen der zweiten Endstellung automatisch, ohne dass ein weiteres Stellglied betätigt werden muss und ohne dass ein weiterer Steuer- oder Regelvorgang erfolgt.

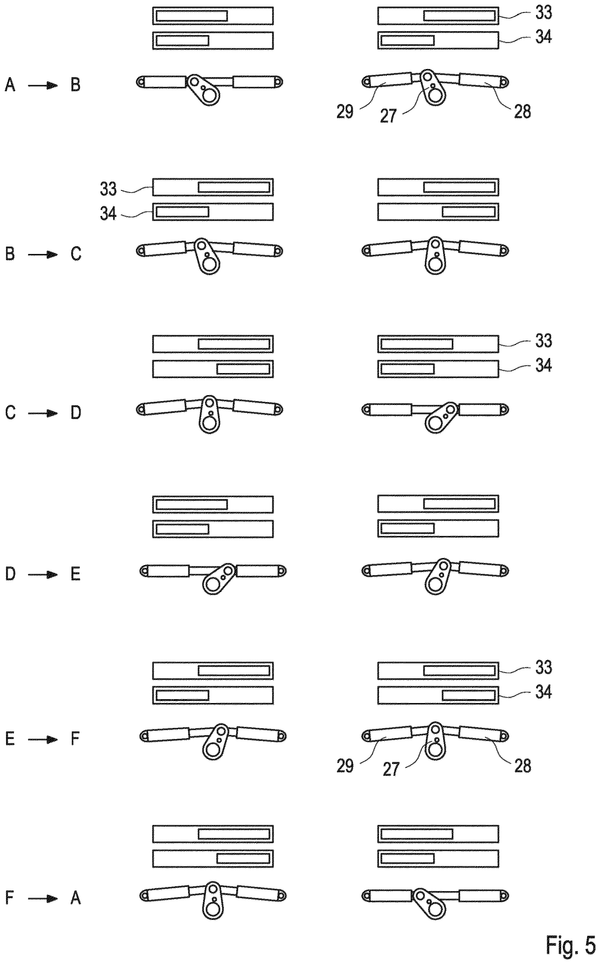

Bei der alternativen Ausführungsform gemäß Fig. 5 erfolgt die Ansteuerung der Steuerzylinder 28, 29 mit lediglich zwei Dosierzylindern 34, 35. Für den Übergang von Schaltzustand A zu Schaltzustand B wird erneut der erste Dosierzylinder 33 betätigt, für den Übergang von Schaltzustand B zu Schaltzustand C wird der zweite Dosierzylinder 34 betätigt. Der Übergang von Schaltzustand C zu Schaltzustand D erfolgt, indem sowohl der erste Dosierzylinder 34 als auch der zweite Dosierzylinder 35 betätigt werden. Die Summe aus dem Volumen der beiden Dosierzylinder 34, 35 entspricht dem größeren Schwenkwinkel, den das Ventilglied 26 zwischen dem Schaltzustand C und dem Schaltzustand D zurücklegt. Das Schalten in entgegengesetzte Richtung erfolgt für den Übergang von Schaltzustand D bis E wiederum mit dem ersten Dosierzylinder 34, für den Übergang von Schaltzustand E zu Schaltzustand F mit dem zweiten Dosierzylinder 35 und von Schaltzustand F zu Schaltzustand A mit den beiden Dosierzylindern 34, 35 gemeinsam.

Die Dosierzylinder 33, 34, 35 können voneinander separate Komponenten sein, mit voneinander getrennten Zylindern und darin angeordneten Kolben. Möglich ist auch eine Gestaltung in Form eines Hydraulikblocks, wobei in dem Hydraulikblock eine Mehrzahl von Zylindern ausgebildet ist.

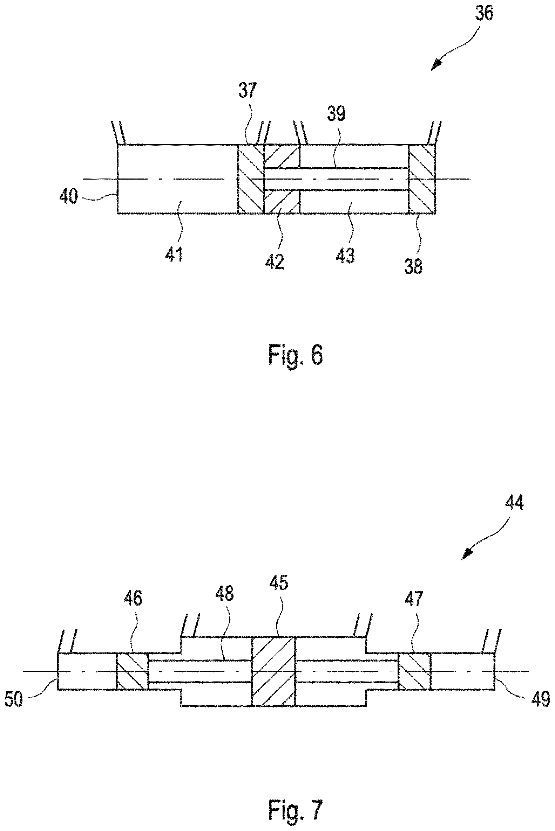

Alternativ kann die Erfindung auch verwirklicht werden, indem ein einzelner Dosierzylinder mit einer Mehrzahl von Dosierkammern ausgestattet ist. In Fig. 6 ist ein Dosierzylinder 36 in Form eines Differenzialzylinders gezeigt. In dem Dosierzylinder 36 sind zwei Kolben 37, 38 angeordnet, die über eine Kolbenstange 39 miteinander verbunden sind. Zwischen dem ersten Kolben 37 und einer gegenüberliegenden Stirnwand 40 ist eine erste Dosierkammer 41 eingeschlossen. Zwischen dem zweiten Kolben 38 und einer Mittelwand 42 ist eine zweite Dosierkammer 43 eingeschlossen. Bei einer Bewegung des Kolbens aus der in Fig. 6 gezeigten rechten Endstellung in die linke Endstellung wird die Hydraulikflüssigkeit aus beiden Dosierkammern 41, 43 verdrängt, wobei das Volumen in der zweiten Dosierkammer 43 aufgrund der in der Dosierkammer 43 angeordneten Kolbenstange 39 kleiner ist als das Volumen der ersten Dosierkammer 41. Bei der Bewegung des Kolbens in entgegengesetzter Richtung ist es umgekehrt. Indem die Steuerzylinder 28, 29 in geeigneter Weise mit der ersten Dosierkammer 41, mit der zweiten Dosierkammer 43 oder mit beiden Dosierkammern 41, 43 zugleich verbunden werden, können alle in den Fig. 4 und 5 gezeigten Schaltvorgänge angesteuert werden.

Eine weitere Ausführungsform eines für die Erfindung geeigneten Dosierzylinders 44 ist in Fig. 7 dargestellt. Der Dosierzylinder 44 hat drei Kolben 45, 46, 47, von denen der mittlere Kolben 45 einen größeren Durchmesser hat und von denen die beiden äußeren Kolben 46, 47 einen kleineren Durchmesser haben. Die drei Kolben 45, 46, 47 sind über eine Kolbenstange 48 miteinander verbunden. In der rechten Endstellung liegt der Kolben 47 an der rechten Stirnwand 49 an. In der linken Endstellung liegt der Kolben 46 an der linken Stirnwand 50 an. Bei einer Bewegung der Kolben 45, 46, 47 von der rechten Endstellung in die linke Endstellung wird ein erstes Volumen an Hydraulikflüssigkeit von dem äußeren Kolben 46 verdrängt, und es wird ein zweites Volumen an Hydraulikflüssigkeit von dem mittleren Kolben 45 verdrängt. Entsprechendes gilt bei der umgekehrten Bewegungsrichtung der Kolben 45, 46, 47. Indem entweder das von dem äußeren Kolben 46, 47 verdrängte Volumen oder das von dem mittleren Kolben 45 verdrängte Volumen oder eine Summe aus beiden Volumina den Steuerzylindern 28, 29 zugeführt wird, können alle in den Fig. 4 und 5 gezeigten Schaltvorgänge des Dickstoffventils 25 angesteuert werden.

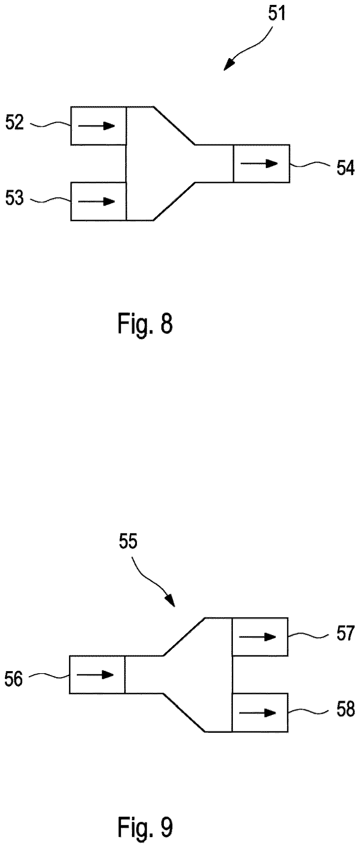

Gemäß Fig. 8 kann das erfindungsgemäße Dickstoffventil auch in Form einer Rohrweiche 51 verwendet werden, die nicht Bestandteil einer Betonpumpe ist. Die Rohrweiche 51 hat zwei Einlassöffnungen 52, 53 und eine Auslassöffnung 54. An die Einlassöffnungen 52, 53 ist jeweils eine Rohrleitung (nicht gezeigt) angeschlossen, durch die ein Flüssigbeton zu der Rohrweiche 51 gefördert wird. Durch Umschalten des Dickstoffventils kann entweder der von der ersten Einlassöffnung 52 kommende Flüssigbeton oder der von der zweiten Einlassöffnung 53 kommende Flüssigbeton oder der von beiden Einlassöffnungen 52, 53 kommende Flüssigbeton zu der Auslassöffnung 54 geleitet werden. Möglich ist auch, das erfindungsgemäße Dickstoffventil bei einer in Fig. 9 gezeigten Rohrweiche 55 anzuwenden, die eine Einlassöffnung 56 und zwei Auslassöffnungen 57, 58 hat.

## Patentansprüche

1. Verfahren zum Betätigen eines Dickstoffventils, bei dem mit einem ersten Schaltvorgang ein Ventilglied (26) zwischen einem ersten Schaltzustand (A) und einem zweiten Schaltzustand (B) umgeschaltet wird, indem einem Steuerzylinder (28, 29) ein erstes Volumen an Hydraulikflüssigkeit zugeführt wird, und bei dem das Ventilglied mit einem zweiten Schaltvorgang zwischen dem zweiten Schaltzustand (B) und einem dritten Schaltzustand (C) umgeschaltet wird, indem einem Steuerzylinder (28, 29) ein zweites Volumen an Hydraulikflüssigkeit zugeführt wird, **dadurch gekennzeichnet, dass** dem Steuerzylinder (28, 29) das erste Volumen an Hydraulikflüssigkeit zugeführt wird, indem ein Dosierkolben eines Dosierzylinders (33, 34, 35) von einer ersten Endstellung in eine zweite Endstellung verfahren wird und dass dem Steuerzylinder (28, 29) das zweite Volumen an Hydraulikflüssigkeit zugeführt wird, indem ein Dosierkolben eines Dosierzylinders (33, 34, 35) von einer ersten Endstellung in eine zweite Endstellung verfahren wird.

2. Verfahren nach Anspruch 1, **dadurch gekennzeichnet, dass** der erste Schaltvorgang mit einem ersten Dosierzylinder (33) und der zweiten Schaltvorgang mit einem zweiten Dosierzylinder (34) angetrieben wird.

3. Verfahren nach Anspruch 1 oder 2, **dadurch gekennzeichnet, dass** das Ventilglied (26) mit einem dritten Schaltvorgang zwischen dem dritten Schaltzustand (C) und einem vierten Schaltzustand (D) umgeschaltet wird, wobei das Volumen an Hydraulikflüssigkeit für den dritten Schaltvorgang der Summe aus dem Volumen des ersten Schaltvorgangs und des zweiten Schaltvorgangs entspricht.

4. Verfahren nach einem der Ansprüche 1 bis 3, **dadurch gekennzeichnet, dass** ein Dosierzylinder (36, 44) verwendet wird, um einen ersten Schaltvorgang und einen zweiten Schaltvorgang anzutreiben.

5. Verfahren nach Anspruch 4, **dadurch gekennzeichnet, dass** der Dosierzylinder (36, 44) eine Mehrzahl von Dosierkolben (37, 38) aufweist.

6. Verfahren nach Anspruch 5, **dadurch gekennzeichnet, dass** dem Steuerzylinder (28, 29) für einen ersten Schaltvorgang das mit dem ersten Dosierkolben (37) geförderte Volumen an Hydraulikflüssigkeit und für einen zweiten Schaltvorgang das mit dem zweiten Dosierkolben (38) geförderte Volumen an Hydraulikflüssigkeit zugeführt wird.

7. Verfahren nach Anspruch 6, **dadurch gekennzeichnet, dass** dem Steuerzylinder (28, 29) für einen dritten Schaltvorgang die Summe aus dem mit dem ersten Dosierkolben (37) und dem mit dem zweiten Dosierkolben (38) geförderte Volumen an Hydraulikflüssigkeit zugeführt wird.

8. Verfahren nach einem der Ansprüche 1 bis 7, **dadurch gekennzeichnet, dass** das Ventilglied (26) mit einer Schwenkbewegung betätigt wird und dass der Schwenkwinkel für einen Schaltvorgang zwischen 10° und 30° liegt.

9. Verfahren nach einem der Ansprüche 1 bis 8, **dadurch gekennzeichnet, dass** für einen Schaltvorgang ein Drehmoment aufgewendet wird, das größer ist als 1 kNm, vorzugsweise größer ist als 5 kNm, weiter vorzugsweise größer ist als 10 kNm.

10. Verfahren nach einem der Ansprüche 1 bis 9, **dadurch gekennzeichnet, dass** die Schaltzeit kürzer ist als 1 Sekunde, vorzugsweise kürzer ist als 0,5 Sekunden, weiter vorzugsweise kürzer ist als 0,3 Sekunden.

11. Dickstoffventil mit einem Ventilglied (26), das zwischen einem ersten Schaltzustand (A), einem zweiten Schaltzustand (B) und einem dritten Schaltzustand (C) umschaltbar ist, mit einem Steuerzylinder (28, 29) zum Betätigen des Ventilglieds (26) und mit ein oder mehreren Dosierzylindern (33, 34, 35, 36, 44), die eine erste Endstellung und eine zweite Endstellung eines Dosierkolbens aufweisen, **dadurch gekennzeichnet, dass** dem Steuerzylinder zum Umschalten des Ventilglieds zwischen dem ersten Schaltzustand (A) und dem zweiten Schaltzustand ein erstes Volumen an Hydraulikflüssigkeit zugeführt wird, indem ein Dosierkolben zwischen einer ersten Endstellung und einer zweiten Endstellung verfahren wird, und dass dem Steuerzylinder (28, 29) zum Umschalten des Ventilglieds zwischen dem zweiten Schaltzustand (B) und dem dritten Schaltzustand (C) ein zweites Volumen an Hydraulikflüssigkeit zugeführt wird, indem ein Dosierkolben zwischen einer ersten Endstellung und einer zweiten Endstellung verfahren wird.

12. Dickstoffpumpe mit einem ersten Förderzylinder (22), mit einem zweiten Förderzylinder (23) und mit einem Dickstoffventil (25), wobei das Dickstoffventil nach Anspruch 11 ausgebildet ist, und wobei eine erste Einlassöffnung (30) des Dickstoffventils (25) mit dem ersten Förderzylinder (22) verbunden ist und eine zweite Einlassöffnung (31) des Dickstoffventils (25) mit dem zweiten Förderzylinder (23) verbunden ist.

## Claims

1. A method for actuating a thick matter valve, in which with a first switching operation a valve member (26) is switched between a first switching state (A) and a second switching state (B) by a first volume of hydraulic fluid being supplied to a control cylinder (28, 29), and in which the valve member with a second switching operation is switched between the second switching state (B) and a third switching state (C) by a second volume of hydraulic fluid being supplied to a control cylinder (28, 29), **characterized in that** the first volume of hydraulic fluid is supplied to the control cylinder (28, 29) by a metering piston of a metering cylinder (33, 34, 35) being displaced from a first end position into a second end position and and **in that** the second volume of hydraulic fluid is supplied to the control cylinder (28, 29) by a metering piston of a metering cylinder (33, 34, 35) being displaced from a first end position into a second end position.

2. The method as claimed in claim 1, **characterized in that** the first switching operation is driven with a first metering cylinder (33) and the second switching operation is driven with a second metering cylinder (34).

3. The method as claimed in claim 1 or 2, **characterized in that** the valve member (26) is switched with a third switching operation between the third switching state (C) and a fourth switching state (D), wherein the volume of hydraulic fluid for the third switching operation corresponds to the sum of the volumes of the first switching operation and the second switching operation.

4. The method as claimed in one of claims 1 to 3, **characterized in that** a metering cylinder (36, 44) is used in order to drive a first switching operation and a second switching operation.

5. The method as claimed in claim 4, **characterized in that** the metering cylinder (36, 44) has a plurality of metering pistons (37, 38).

6. The method as claimed in claim 5, **characterized in that**, for a first switching operation, the volume of hydraulic fluid conveyed with the first metering piston (37) is supplied to the control cylinder (28, 29) and, for a second switching operation, the volume of hydraulic fluid conveyed with the second metering piston (38) is supplied to the control cylinder (28, 29).

7. The method as claimed in claim 6, **characterized in that**, for a third switching operation, the sum of the volume of hydraulic fluid conveyed with the first metering piston (37) and with the second metering piston (38) is supplied to the control cylinder (28, 29).

8. The method as claimed in one of claims 1 to 7, **characterized in that** the valve member (26) is activated with a pivot movement and **in that** the pivot angle for a switching operation is between 10° and 30°.

9. The method as claimed in one of claims 1 to 8, **characterized in that**, for a switching operation, a torque which is greater than 1 kNm, preferably greater than 5 kNm, more preferably greater than 10 kNm is applied.

10. The method as claimed in one of claims 1 to 9, **characterized in that** the switching time is shorter than 1 second, preferably shorter than 0.5 seconds, more preferably shorter than 0.3 seconds.

11. A thick matter valve having a valve member (26) which can be switched between a first switching state (A), a second switching state (B) and a third switching state (C), having a control cylinder (28, 29) for actuating the valve member (26) and having one or more metering cylinders (33, 34, 35, 36, 44) which have a first end position and a second end position of a metering piston, **characterized in that**, in order to switch the valve member between the first switching state (A) and the second switching state, a first volume of hydraulic fluid is supplied to the control cylinder by a metering piston being displaced between a first end position and a second end position, and **in that**, in order to switch the valve member between the second switching state (B) and the third switching state (C), a second volume of hydraulic fluid is supplied to the control cylinder (28, 29) by a metering piston being displaced between a first end position and a second end position.

12. A thick matter pump having a first conveying cylinder (22), having a second conveying cylinder (23) and having a thick matter valve (25), wherein the thick matter valve is constructed as claimed in claim 11, and wherein a first inlet opening (30) of the thick matter valve (25) is connected to the first conveying cylinder (22) and a second inlet opening (31) of the thick matter valve (25) is connected to the second conveying cylinder (23).

## Revendications

1. Procédé permettant d'actionner une vanne pour matière épaisse, dans lequel un élément de vanne (26) est commuté par une première opération de commutation entre un premier état de commutation (A) et un deuxième état de commutation (B) en ce qu'un premier volume de liquide hydraulique est amené à un cylindre de commande (28, 29), et dans lequel l'élément de vanne est commuté par une deuxième opération de commutation entre le deuxième état de commutation (B) et un troisième état de commutation (C) en amenant un deuxième volume de liquide hydraulique à un cylindre de commande (28, 29),
**caractérisé en ce que** le premier volume de liquide hydraulique est amené au cylindre de commande (28, 29) **en ce qu'**un piston de dosage d'un cylindre de dosage (33, 34, 35) est déplacé d'une première position d'extrémité à une deuxième position d'extrémité, et **en ce que** le deuxième volume de liquide hydraulique est amené au cylindre de commande (28, 29) **en ce qu'**un piston de dosage d'un cylindre de dosage (33, 34, 35) est déplacé d'une première position d'extrémité à une deuxième position d'extrémité.

2. Procédé selon la revendication 1, **caractérisé en ce que** la première opération de commutation est entraînée par un premier cylindre de dosage (33), et la deuxième opération de commutation est entraînée par un deuxième cylindre de dosage (34).

3. Procédé selon la revendication 1 ou 2, **caractérisé en ce que** l'élément de vanne (26) est commuté par une troisième opération de commutation entre le troisième état de commutation (C) et un quatrième état de commutation (D), dans lequel le volume de liquide hydraulique pour la troisième opération de commutation correspond à la somme des volumes de la première opération de commutation et de la deuxième opération de commutation.

4. Procédé selon l'une quelconque des revendications 1 à 3, **caractérisé en ce qu'**un cylindre de dosage (36, 44) est utilisé pour entraîner une première opération de commutation et une deuxième opération de commutation.

5. Procédé selon la revendication 4, **caractérisé en ce que** le cylindre de dosage (36, 44) présente une pluralité de pistons de dosage (37, 38).

6. Procédé selon la revendication 5, **caractérisé en ce que** pour une première opération de commutation, le volume de liquide hydraulique débité à l'aide du premier piston de dosage (37), et pour une deuxième opération de commutation, le volume de liquide hydraulique débité à l'aide du deuxième piston de dosage (38) sont amenés au cylindre de commande (28, 29) .

7. Procédé selon la revendication 6, **caractérisé en ce que** pour une troisième opération de commutation, la somme des volumes de liquide hydraulique débités à l'aide du premier piston de dosage (37) et du deuxième piston de dosage (38) est amenée au cylindre de commande (28, 29).

8. Procédé selon l'une quelconque des revendications 1 à 7, **caractérisé en ce que** l'élément de vanne (26) est actionné par un mouvement pivotant, et **en ce que** l'angle de pivotement pour une opération de commutation est compris entre 10° et 30°.

9. Procédé selon l'une quelconque des revendications 1 à 8, **caractérisé en ce que** pour une opération de commutation, un couple est appliqué qui est supérieur à 1 kNm, de préférence supérieur à 5 kNm, de plus grande préférence encore supérieur à 10 kNm.

10. Procédé selon l'une quelconque des revendications 1 à 9, **caractérisé en ce que** le temps de manoeuvre est inférieur à 1 seconde, de préférence inférieur à 0,5 seconde, de plus grande préférence inférieur à 0,3 seconde.

11. Vanne pour matière épaisse, comprenant un élément de vanne (26) qui peut être commuté entre un premier état de commutation (A), un deuxième état de commutation (B) et un troisième état de commutation (C), un cylindre de commande (28, 29) pour actionner l'élément de vanne (26) et un ou plusieurs cylindres de dosage (33, 34, 35, 36, 44) qui présentent une première position d'extrémité et une deuxième position d'extrémité d'un piston de dosage,
**caractérisée en ce qu'**un premier volume de liquide hydraulique est amené au cylindre de commande pour commuter l'élément de vanne entre le premier état de commutation (A) et le deuxième état de commutation **en ce qu'**un piston de dosage est déplacé entre une première position d'extrémité et une deuxième position d'extrémité, et **en ce qu'**un deuxième volume de liquide hydraulique est amené au cylindre de commande (28, 29) pour commuter l'élément de vanne entre le deuxième état de commutation (B) et le troisième état de commutation (C) **en ce qu'**un piston de dosage est déplacé entre une première position d'extrémité et une deuxième position d'extrémité.

12. Pompe pour matière épaisse, comprenant un premier cylindre de débit (22), un deuxième cylindre de débit (23) et une vanne pour matière épaisse (25), dans laquelle la vanne pour matière épaisse est réalisée selon la revendication 11, et dans laquelle une première ouverture d'entrée (30) de la vanne pour matière épaisse (25) est reliée au premier cylindre de débit (22), et une deuxième ouverture d'entrée (31) de la vanne pour matière épaisse (25) est reliée au deuxième cylindre de débit (23).
